(19) Europäisches Patentamt
European Patent Office
Office européen des brevets

(11) **EP 2 087 738 B1**

(12) **EUROPEAN PATENT SPECIFICATION**

(45) Date of publication and mention
of the grant of the patent:
**13.04.2016 Bulletin 2016/15**

(51) Int Cl.:
***H04N 19/70*** *(2014.01)*

(21) Application number: **07852727.2**

(22) Date of filing: **12.10.2007**

(86) International application number:
**PCT/US2007/021902**

(87) International publication number:
**WO 2008/048515 (24.04.2008 Gazette 2008/17)**

(54) **METHOD FOR REFERENCE PICTURE MANAGEMENT INVOLVING MULTIVIEW VIDEO CODING**

VERFAHREN ZUR REFERENZBILDVERWALTUNG UNTER BETEILIGUNG VON
MEHRANSICHTS-VIDEOKODIERUNG

PROCÉDÉ DE TRAITEMENT D'UNE IMAGE DE RÉFÉRENCE IMPLIQUANT UN CODAGE VIDÉO
MULTIVUES

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **13.10.2006 US 851522 P
13.10.2006 US 851589 P**

(43) Date of publication of application:
**12.08.2009 Bulletin 2009/33**

(73) Proprietor: **Thomson Licensing
92130 Issy-les-Moulineaux (FR)**

(72) Inventors:
• **PANDIT, Purvin Bibhas
Franklin Park, NJ 08823 (US)**
• **SU, Yeping
Vancouver, WA 98682 (US)**
• **YIN, Peng
West Windsor, NJ 08550 (US)**

(74) Representative: **Hofstetter, Schurack & Partner
Patent- und Rechtsanwaltskanzlei
PartG mbB
Balanstrasse 57
81541 München (DE)**

(56) References cited:
**EP-A1- 2 005 753     EP-A2- 2 039 170**

• **VETRO ET AL.: "Joint Multiview Video Model
(JMVM) 1.0" JOINT VIDEO TEAM (JVT) OF ISO/IEC
MPEG &ITU-T VCEG (ISO/IEC JTC1/SC29/WG11
AND ITU-T SG16 Q.6) 20TH MEETING, [Online] 15
July 2006 (2006-07-15), XP002474680 Klagenfurt,
Austria Retrieved from the Internet:
URL:http://ftp3.itu.ch/av-arch/jvt-site/20
06_07_Klagenfurt/JVT-T208.doc> [retrieved on
2008-04-01] cited in the application**
• **PANDIT ET AL.: "On MVC high-level syntax for
picture management" JOINT VIDEO TEAM (JVT)
OF ISO/IEC MPEG &ITU-T VCEG (ISO/IEC
JTC1/SC29/WG11 AND ITU-T SG16 Q.6) 20TH
MEETING, [Online] 15 July 2006 (2006-07-15),
XP002474681 Klagenfurt, Austria Retrieved from
the Internet:
URL:http://ftp3.itu.ch/av-arch/jvt-site/20
06_07_Klagenfurt/JVT-T131.doc> [retrieved on
2008-04-02]**
• **MARTINIAN ET AL.: "Results of core experiment
1B on Multiview Coding" ISO/IEC
JTC1/SC29/WG11 CODING OF MOVING
PICTURES AND AUDIO M13122, April 2006
(2006-04), XP002474682 Montreux, Switzerland**

**Description**

TECHNICAL FIELD

The present invention relates to the field of moving pictures, especially the issue of the memory maintenance of moving pictures associated with multiview video coding.

BACKGROUND

Many interframe encoding systems make use of reference pictures where the use of such reference pictures helps reduce the size of an encoded bit stream. This type of result is encoding efficiency is better than just using intraframe encoding techniques, by themselves. Many encoding standards therefore incorporate both intraframe and interfame encoding techniques to encode a bit stream from a series of moving images. As known in the art, different types of reference pictures are used for encoding standards such as an "I" picture which is encoded only by using elements within the picture itself (intraframe), a "B" picture which is encoded by using elements from within the picture itself and/or elements from two previous reference pictures (interframe), and a "P" picture which is encoded by using elements from within the picture itself and/or elements from one previous reference picture (interframe). Both "B' and "P" pictures can use multiple reference pictures, but the difference between both of these type of pictures is that "B" allows the use of inter prediction with at most two motion-compensated prediction signals per block while "P" allows the use of one only predictor per predicted block.

When the "B" or "P" pictures are being encoded and/or decoded, such pictures are therefore dependent on other reference frames so that such pictures may be properly encoded or constructed during a decoding operation. The encoding/decoding system should provide some type of memory location so that reference picture can be stored while other pictures are being encoded or decoded in view of such reference pictures. Obviously, after a while, a reference picture cannot be used for a coding operation because no more pictures to be coded will use the reference picture during the future coding operation.

Although, one could store all the reference pictures permanently in a storage device, such a solution would be an inefficient use of memory resources. Therefore, memory techniques such as using a First in First Out (FIFO) or Last in First Out (LIFO) memory operations, as known in the art, could be used in the case of operating a memory device with the storage of reference pictures to help reduce the space required for such reference pictures (by discarding unnecessary reference pictures). Such memory operations however may produce undesirable results when considering the use of an multiview coding system where pictures that are encoded and/or decoded have both a temporal and a view inter-relationship. That is, the multiview coding system introduces the aspect of having multiple views of moving pictures, where each view represents a different view of a respective object/scene. Now, a reference picture may be used in the encoding or decoding of pictures associated with two different views. Therefore, simple memory techniques can not be used in such an environment.

Document EP 2 005 753 A1 (WO 2007/114612 A2) discloses a method for decoding/encoding a video signal. The method includes the steps of checking an encoding scheme of the video signal, obtaining configuration information for the video signal according to the encoding scheme, recognizing a total number of views using the configuration information, recognizing inter-view reference information based on the total number of the views, and decoding the video signal based on the inter-view reference information, wherein the configuration information includes at least view information for identifying a view of the video signal. Furthermore, document EP 2 039 170 A2 (WO 2008/005575 A2) discloses a decoder and decoding method for decoding at least one picture corresponding to at least one of at least two views of multi-view video content from a bit stream, wherein in the bit stream at least one of coding order information and output order information for the at least one picture is decoupled from the at least one view to which the at least one picture corresponds. Furthermore, there is disclosed an encoder and encoding method for encoding at least one picture corresponding to at least one of at least two views of multi-view video content to form a resultant bit stream, wherein in the resultant bit stream at least one of coding order information and output order information for the at least one picture is decoupled from the at least one view to which the at least one picture corresponds.

SUMMARY

These and other drawbacks and disadvantages of the prior art are addressed by the present principles, which are directed to a method according to claim 1 and an apparatus according to claim 5 for reusing available motion information as a motion estimation predictor for video encoding. Favourable further developments are defined in the subclaims.

These and other aspects, features and advantages of the present principles will become apparent from the following detailed description of exemplary embodiments, which is to be read in connection with the accompanying drawings.

## BRIEF DESCRIPTION OF THE DRAWINGS

The present principles may be better understood in accordance with the following exemplary figures, in which:

FIG. 1 presents an exemplary embodiment multiview coding of video picture views at different times, where such video pictures are coded using reference pictures in the manner indicated in the figure.
FIG. 2 presents an exemplary embodiment of a video coder in accordance with the principles of the present invention.
FIG. 3 presents an embodiment of pseudo code for a syntax element dec_ref_pic_marking() used in accordance with the principles of the present invention.
FIG. 4 presents the pseudo code for a syntax element seq_parameter_set_mvc_extension() used in accordance with the principles of the present invention.
FIG. 5 presents an embodiment of pseudo code for a syntax element dec_ref_pic_marking_mvc_extension() used in accordance with the principles of the present invention.
FIG. 6 presents an embodiment of a sample picture header used in accordance with the principles of the present invention.
FIG. 7 presents an embodiment of pseudo code for a syntax element dec_ref_pic_marking_mvc_extension() used in accordance with the principles of the present invention.
FIG. 8 presents an embodiment of a sample picture header used in acoordance with the principles of the present invention.
FIG. 9 presents an embodiment of pseudo code for a syntax element dec_ref_pic_marking_mvc_extension() used in accordance with the principles of the present invention.
FIG. 10 presents an embodiment of pseudo code for a syntax element dec_ref_pic_marking_mvc_extension() used in accordance with the principles of the present invention.
FIG. 11 presents a block diagram of an embodiment of a picture marking method in accordance with principles of the present invention

## DETAILED DESCRIPTION

The principles of the invention can be applied to any intra-frame and inter-frame based encoding standard. The term "picture" which is used throughout this specification is used as a generic term for describing various forms of video image information which can be known in the art as a "frame", "field", and "slice", as well as the term "picture" itself.
Also, in the description of the present invention, various commands (syntax elements) which use the C language type of formatting are detailed in the figures that use the following nomenclature for descriptors in such commands:

u(n): unsigned integer using n bits. When n is "v" in the syntax table, the number of bits varies in a manner dependent on the value of other syntax elements. The parsing process for this descriptor is specified by the return value of the function read_bits( n ) interpreted as a binary representation of an unsigned integer with most significant bit written first.
ue(v): unsigned integer Exp-Golomb-coded syntax element with the left bit first.
se(v): signed integer Exp-Golomb-coded syntax element with the left bit first.
C: represents the category for which a syntax element applies to, i.e. to what level should a particular field apply.

The present description illustrates the present principles. It will thus be appreciated that those skilled in the art will be able to devise various arrangements that, although not explicitly described or shown herein, embody the present principles and are included within its spirit and scope.
All examples and conditional language recited herein are intended for pedagogical purposes to aid the reader in understanding the present principles and the concepts contributed by the inventor(s) to furthering the art, and are to be construed as being without limitation to such specifically recited examples and conditions.
Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.
Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudo code, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular techniques being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for, executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles means that a particular feature, structure, characteristic, and so forth described in connection with the embodiment is included in at least one embodiment of the present principles. Thus, the appearances of the phrase "in one embodiment" or "in an embodiment" appearing in various places throughout the specification are not necessarily all referring to the same embodiment.

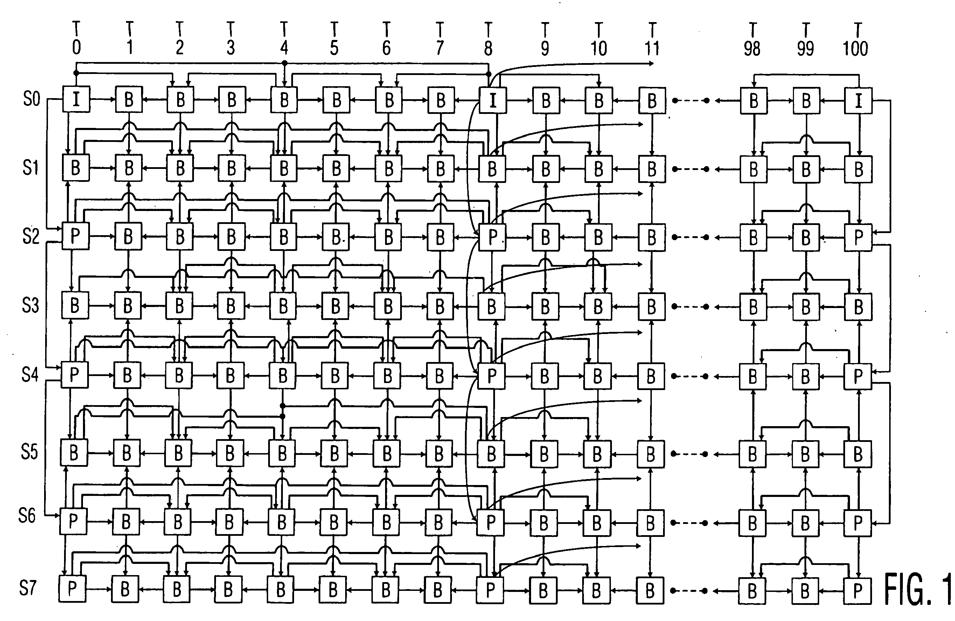

FIG. 1 represents an exemplary embodiment of a reference picture structure used in a Multiview Coding system. Specifically, the presented structure pertains to the use of eight different views (S0-S7) for times (T0-T100) in accordance with the multiview encoding (MVC) scheme proposed in A. Vetro, Y. Su, H. Kimata, A. Smolic, "Joint Multiview Video Model (JMVM) 1.0", JVT-T208.doc, Klagenfurt, Austria, July, 2006. This multiview encoding standard is based on coding in the Advanced Video Coding (AVC) standard (G. Sullivan, T. Wiegand, A. Luthra, "Draft of Version 4 of H.264/AVC (ITU-T Recommendation H.264 and ISO/IEC 14496-10 (MPEG-4 part 10) Advanced Video Coding)", Palma de Mallorca, ES 18-22, October 2004). The large difference between both standards is AVC does not addresses coding multiview pictures while MVC does.

Referring back to FIG. 1, it can be seen for example that when coding a picture associated with view S1 at T1, that the picture to be coded is related to pictures (reference pictures) from the same view (S1 at T0 and S1 at T2), and that the picture to be coded is related to pictures from pictures from a different view (S0 at T1 and S2 at T1). Hence, when coding the picture associated with S1, T1, it would make sense to keep reference pictures (S1 at T0, S1 at T2, S0 at T1 and S2 at T1) in a memory device such as a buffer, register, RAM, and the like which may be implemented either in hardware, software, or a combination thereof. Such reference pictures however would not be that useful when considering the coding of a picture S7 at T98, which would rely on the use of different reference pictures than used for picture, 5 at T1.

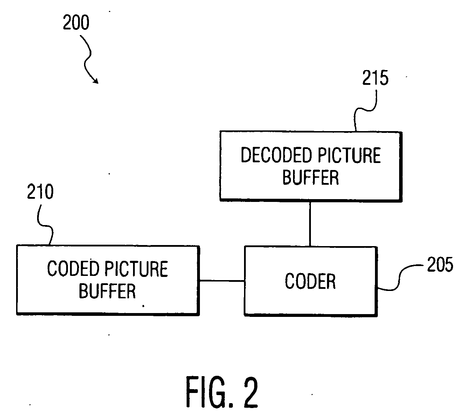

One solution for effective memory management of a buffer for a coding operation is disclosed in the use of the decoded picture buffer (DPB) which is associated with the AVC video standard. In a simplified version of block diagram 200 in FIG. 2, the operation between a coder 205, coding buffer 210, and decoded picture buffer 215 is shown. During a coding operation (either encoding or decoding), a picture that is currently being coded by coder 205 is present in coding buffer 210, while previously coded reference pictures are stored in decoded picture buffer 215. AVC discloses the use commands known as memory management control operations (MMCO) which allow the coder 205 to specify how the reference pictures in decoder picture buffer 215 should be maintained. That is, when a picture is being encoded, such MMCOs are inputted into the header of the picture presently being encoded as to specify what should be done with the reference pictures that came before such a picture. This operation is known as "marking". These commands then can be used by the coder 205 in the future as to determine what should be done with a reference picture that is present in decoder picture buffer 215. It should be noted that although the term picture is being used to represent various elements video information, AVC refers to the use of slices where such reference pictures may use slices from the same picture as a "reference picture", and regardless of how a picture may be sub-divided, the principles of the present invention apply.

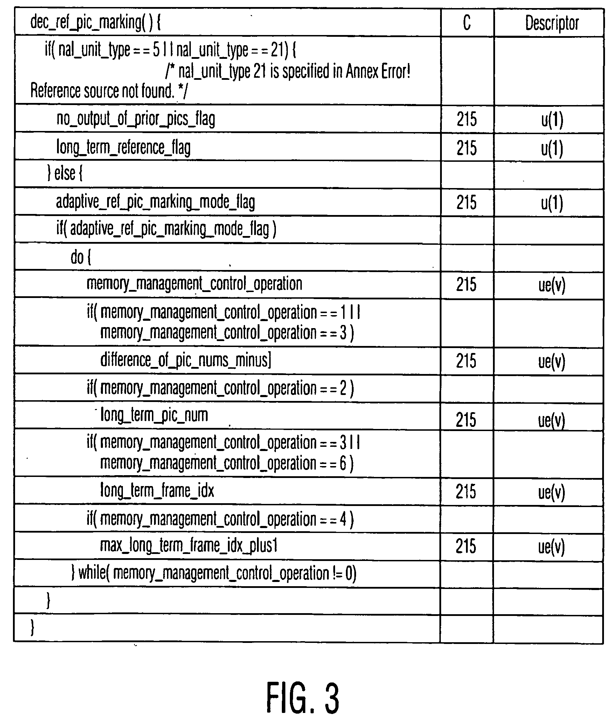

FIG. 3 represents the command in AVC (**dec_ref_pic_marking**) that is used to implement MMCO commands. Specifically, a reference picture is marked as being a short term reference picture, a long term reference picture, or the picture is marked as not being a reference picture (in which case the reference picture would be discarded if memory is needed) when employing a MMCO command. The statuses of reference pictures may be changed as more pictures are coded, for example a reference picture that is designated as being a short term as one picture is being code picture can be identified as being a long term reference picture when a second picture is being coded.

FIG. 3 also presents a command flag known as the **adaptive_ref_pic_marking_mode_flag** which is used between two different modes for performing the marking of picture headers (slice headers). When the flag is set to "0", a sliding window reference marking mode is activated that provides a FIFO mechanism for short-term reference pictures. When the flag is set for "1", an adaptive reference picture marking mode is activated which provides syntax elements to mark reference pictures as "unused for reference" and to assign long-term-frame indices to reference pictures, etc. The various assignments for reference frames via MMCO commands used in AVC are shown in Table 1 below:

TABLE 1

| memory_management_control_operation | Memory Management Control Operation |
|---|---|
| 0 | End memory_Management_control_operation syntax element loop |
| 1 | Mark a short-term reference picture as "unused for reference" |
| 2 | Mark a long-term reference picture as "unused for reference" |
| 3 | Mark a short-term reference picture as "used for long-term reference" and assign a long-term frame index to it |
| 4 | Specify the maximum long-term frame index and mark all long-term reference pictures having long-term frame indices greater than the maximum value as "unused for reference" |
| 5 | Mark all reference pictures as "unused for reference" and set the MaxLongTermFrameIdx variable to "no long-term frame indices" |
| 6 | Mark the current picture as "used for long-term reference" and assign a long-term frame index to it |

One problem with the design of AVC is that pictures can be identified by their respective frame number (frame_num) value which represents the actual coding order of a picture (in a sequence of pictures) and by a picture's respective picture order count (POC) which is the order in which a picture is to be displayed. MVC however is more complex than AVC because multiple views must be considered in MVC, while AVC is concerned with just a single view. Hence, in MVC, an additional value view id (view_id) is used to associate a particular picture to a particular view.

When combining therefore the MMCO of AVC with the usage of view_ids from MVC, the current usage of MMCOs of the prior art only allow a user to supply MMCOs according to pictures of the same view_id. That is, a picture that is being coded can only refer to other pictures of the same view_id type (view 1 type pictures can only supply MMCO commands for other view 1 type pictures).

Having to keep track of all of these different views with the current usage of MMCO commands prevents an inefficient usage of memory management for operating a DPB.

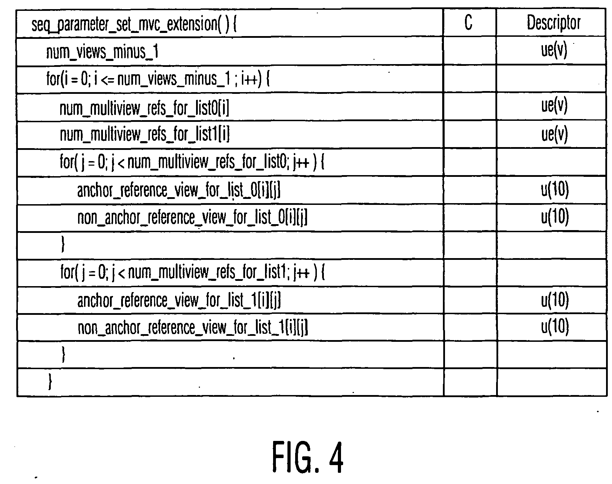

Specifically, FIG. 4 represents the current MVC, where an additional syntax has been added in the SPS (which is used to signal cross view references). The added syntax is used to indicate the cross-view references to be used for anchor (i.e. I pictures) and non-anchor pictures in the way described below.

Please note that an anchor picture typically represents a coded picture in which all slices reference only slices with the same picture order count, i.e., only slices in other views, and not slices in the current view. Such a picture is signaled by setting the anchor_pic_flag to 1. After decoding the anchor picture, all of the following corded pictures in display order shall be capable of being decoded within using inter prediction from any other picture decoder prior to the anchor picture. If a picture in one view is an anchor picture, then all pictures within the same temporal index in other views shall also be known as anchor pictures.

The following procedure shall be conducted to place reference pictures from a view that is different from a current view into the reference prediction lists:

- For each value of 'I' from 0 to num_multiview_ref_for_listX-1:
- The reconstructed picture from view reference_view_or_list_X[i] that is temporally aligned with the current picture shall be obtained and inserted into the decoded picture buffer (DPB).
- An index to that picture shall be inserted into the next empty slot in RefPicListX.

In this specified implementation, the MMCO commands are associated directly with the individual views only and cannot mark pictures in other views. As a direct consequence, cross-view reference pictures could stay in the DPB longer than necessary (as indicated above) because such a picture can only be marked "unused for reference" by a picture in its own view later in the bitstream. For example, referring to FIG. 1, pictures for T0-T11 in view S0 are only needed for views S1, S2, and thereafter are marked as used for reference. Hence, the DPB storing such pictures would require a large storage area. Hence, the only way to clear the DPB, without consideration of what view a picture is associated with, either a picture associated with the start of a new group of pictures (GOP) or an instantaneous decoding refresh (IDR) picture would indicate to completely clear the DPB of reference pictures.

The present invention therefore proposes a solution to the DPB problem by providing MMCO which can be applied cross-views, which means that when a picture is being coded, such a picture will contain information as to how consider reference pictures across views (views which are not the same as the picture currently being coded).

Several embodiments of the present invention are presented in view of the AVC standard where new high level syntax elements are defined and discussed, although it is to be understood that the principles also apply to other coding standards that make use of multiple view pictures.

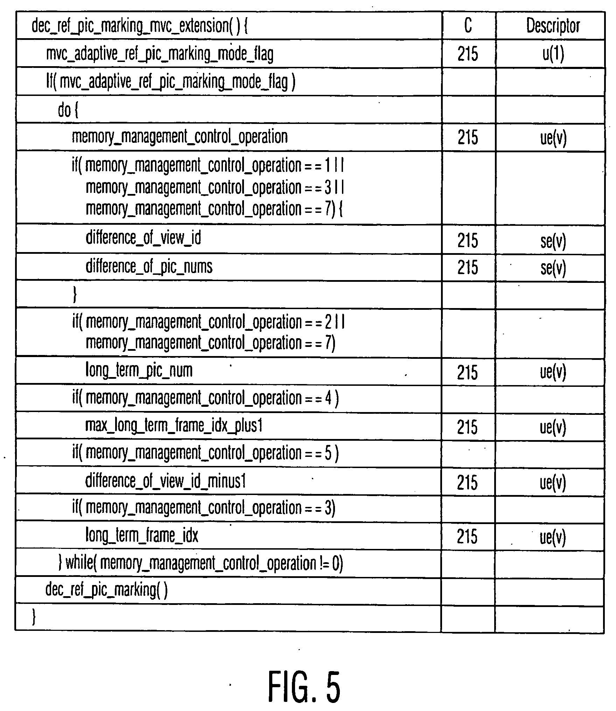

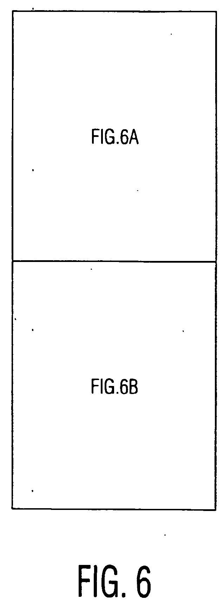

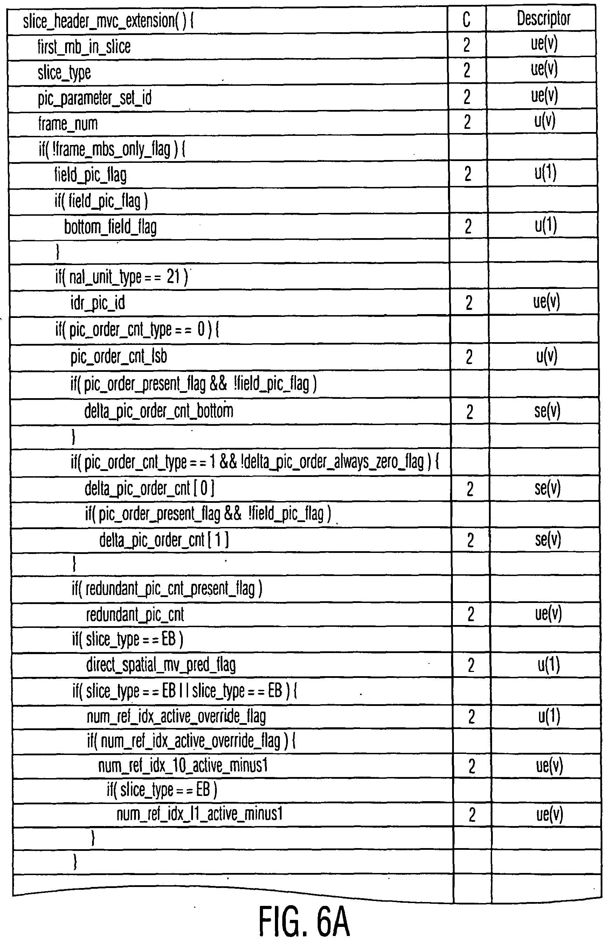

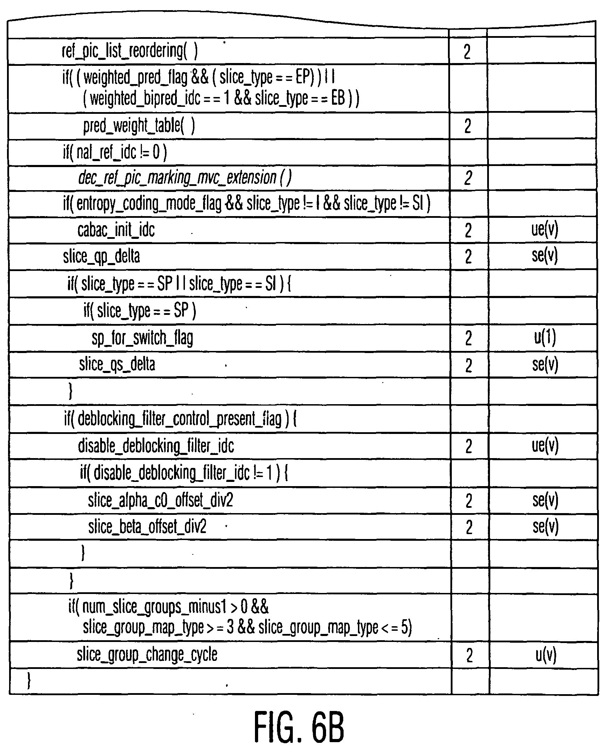

In one embodiment presented in FIG. 5, a new syntax element **dec_ref_pic_marking_mvc_extension()** which is to be used to mark pictures across views. This function is called from the corresponding slice_header_mvc_extension() function presented in FIG. 6 which represents the picture header syntax of a picture being coded (specifically this command is adapted from the slice header shown in AVC).

Since this new syntax is only used to mark picture that are in a view other than the current view, it must also be considered to provide the option of allowing the system to mark pictures within the same view. The marking of pictures within the same view is enabled by calling the AVC compatible function **dec_ref_plc_marking** (see FIG. 5) after the new marking process. It is noted that such a function may be called either before or after the activation of the MVC based marking.

An additional constraint is placed on the AVC based **dec_ref_pic_marking()** syntax for MVC, where the AVC syntax only assumes a single view because multiview systems were not addressed initially in the AVC standard. Hence, the AVC syntax has to be applied only to the view to which a current picture being coded belongs.

Referring back to FIG. 5, several additional syntaxes are added which are defined below:

**mvc_adaptive_ref_pic_marking_mode_flag** which is used to select between the reference marking mode of a picture that is currently being coded. The flag at "0" represents a sliding window reference picture marking mode, where short term reference pictures are assigned a FIFO basis in the DPB. The flag at "1" represents an adaptive reference picture marking mode, where elements may be provided to mark reference pictures in a view other than the view associated with a picture currently being coded. Such statuses for references pictures in the other views include "unused for reference" and "long-term frame indices".

The flag shall be equal to 1 when the number of pictures (frames, complementary field pairs, and non-field fields) that are currently marked as "used for long-term reference" is equal to Max (Num_ref_frames, 1).

**memory_management_control_operation** specifies a control operation (MMCO) to be applied to affect the reference picture marking operation by a coder. The memory_Management_control_operation syntax element is followed by data necessary for the operation specified by the value of the control operation. The values and control operations associated with the MMCOs for multiview are specified below in Table 2. The memory_management_control_operation syntax elements are processed by coding processing in the order in which such commands appear in a picture header (e.g., slice header), and the semantic constraints expressed for each MMCO applies in the specific position in which that individual MMCO is processed.

TABLE 2

| memory_Management_control_operation | Memory Management Control Operation |
| --- | --- |
| 0 | End memory_management_control_operation syntax element loop |
| 1 | Mark a short-term reference picture in a view other than itself as "unused for reference" |
| 2 | Mark a long-term reference picture in a view other than itself as "unused for reference" |
| 3 | Mark a short-term reference picture in a view other than itself as "used for long-term reference" and assign a long-term frame index to it |
| 4 | Specify the maximum long-term frame index and mark all long-term reference pictures having long-term frame indices greater than the maximum value as "unused for reference" |

(continued)

| memory_Management_control_operation | Memory Management Control Operation |
|---|---|
| 5 | Mark all reference pictures in a view as "unused for reference" |
| 6 | Mark all reference pictures in all views other than itself as "unused for reference" and set the MaxLongTermFrameIdx variable to "no long-term frame indices" |
| 7 | Mark a long-term reference picture in a view other than itself as "used for short-term reference" |

memory_management_control_operation shall not be equal to 1 in a picture header (e.g., slice header) unless the specified reference picture is marked as "used for short-term reference" when the memory_management_control_operation is processed by a coding process.

memory_management_control_operation shall not be equal to 2 in a slice header unless the specified long-term picture number refers to a reference picture that is marked as "used for long-term reference" when the memory_management_control_operation is processed by the decoding process.

memory_management_control_operation shall not be equal to 3 in a slice header unless the specified reference picture is marked as "used for short-term reference" when the memory_Management_control_operation is processed by the decoding process.

memory_management_control_operation shall not be equal to 3, 5 or 6 if the value of the variable MaxLongTermFrameIdx is equal to "no long-term frame indices" when the memory_management_control_operation is processed by the decoding process.

Not more than one memory_Management_control_operation equal to 4 shall be present in a picture header.

Not more than one memory_Management_control_operation equal to 5 shall be present in a picture header.

Not more than one memory_management_control_operation equal to 6 shall be present in a picture header.

When decoding a field and a memory_Management_control_operation command equal to 3 is present that assigns a long-term frame index to a field that is part of a short-term reference frame or part of a short-term complementary reference field pair, another memory_Management_control_operation command to assign the same long-term frame index to the other field of the same frame or complementary reference field pair shall be present in the same decoded reference picture marking syntax structure.

Note, the above requirement must be fulfilled even when the field referred to by the MMCO is equal to 3 and is subsequently marked as "unused for reference" as for example when a MMCO is equal to 2 in a picture header, which causes a field to be marked as "unused for reference".

When the first field (in decoding order) of a complementary reference field pair includes a long_term_reference_flag equal to 1 or a memory_management_control_operation command equal to 6, the decoded reference picture marking syntax structure for the other field of the complementary reference field pair shall contain a memory_management_control_operation command equal to 6 that assigns the same long-term frame index to the other field.

Note, the above requirement must be fulfilled even when the complementary reference field pair is subsequently marked as "unused for reference" as for example when a MMCO is equal to 2 in a picture header of a second field that causes which causes a field to be marked as "unused for reference".

**difference_of_view_id** is used to derive the view_id to which the current memory_Management_control_operation is applicable.

**difference_of_pic_nums** is used to assign a long-term frame index to a short-term reference picture in a view other than itself or to mark a short-term reference picture in a view other than itself as "unused for reference". When the associated memory_management_control_operation is processed by the decoding process and the resulting picture number derived from difference_of_pic_nums shall be a picture number assigned to one of the reference pictures marked as "used for reference" and not previously assigned to a long-term frame index.

The resulting picture number is to be constrained as follows:

-   If field_pic-flag is equal to 0, the resulting picture number shall be one of the set of picture numbers assigned to reference frames or complementary reference field pairs.

Note, when the field_pic_flag is equal to 0, the resulting picture number must be a picture number assigned to a complementary reference field pair in which both fields are marked as "used for reference" or a frame in which both fields are marked as "used for reference". In particular, when field_pic_flag is equal to 0, the marking of a non-paired field or a frame in which a single field is marked as "used for reference" cannot be affected by a memory_management_control_operation equal to 1.

- Otherwise, (field_pic_flag is equal to 1), the resulting picture number shall be one of the set of picture numbers assigned to reference fields.

**long_term_frame_idx** is used (with memory_Management_control_operation equal to 2) to assign a long-term frame index to a picture with view_id different from the current picture's view_id. When the associated memory_Management_control_operation is processed by the decoding process, the value of long_term_frame_idx shall be in the range of 0 to MaxLongTermFrameIdx, inclusive.

The syntax **difference_of_pic_nums,** allows to select pictures with a picNum that is larger that the picNum of the current picture. This makes marking more efficient.

The application of the different functions shown in TABLE 2 are shown below:

When the MMCO equals 1, this represents that a short-term reference picture is defined as being "unused for reference". Therefore, let picNumX be specified by:

$$picNumX = CurrPicNum - (\, difference\_of\_pic\_nums)$$

Let viewId be specified by

$$viewIdX = CurrViewId - (\, difference\_of\_view\_id\,)$$

Depending on field_pic-flag the value of picNumX is used to mark a short-term reference picture as "unused for reference" as follows.

- If field_pic_flag is equal to 0, the short-term reference frame or short-term complementary reference field pair specified by picNumX in the view specified by viewIdX and both of its fields are marked as "unused for reference".

- Otherwise (field_pic_flag is equal to 1), the short-term reference field specified by picNumX in the view specified by viewIdX is marked as "unused for reference". When that reference field is part of a reference frame or a complementary reference field pair, the frame or complementary field pair is also marked as "unused for reference", but the marking of the other field is not changed.

When the MMCO equals 2, this situation represents that a long term reference picture is being changed to be "unused for reference". Depending on field_pc_flag, the value of LongTermPicNum is used to mark a long-term reference picture as "unused for reference" as follows:

- If field_pic_flag is equal to 0, the long-term reference frame or long-term complementary reference field pair having LongTermPicNum equal to long_term_pic_num and both of its fields are marked as "unused for reference".
- Otherwise (field_ic_flag is equal to 1), the long-term reference field specified by LongTermPicNum equal to long_term_pic_num is marked as "unused for reference". When that reference field is part of a reference frame or a complementary reference field pair, the frame or complementary field pair is also marked as "unused for reference", but the marking of the other field is not changed.

When the MMCO equals 3, this situation represents the process of assigning a LongTermFrameIdx to a short-term reference picture (making a short term reference picture a long term reference picture).

Given the syntax element difference_of_pic_nums and difference_of_view_id, the variable picNumX and viewIdX are obtained as specified above. picNumX shall refer to a frame or complementary reference field pair or non-paired reference field marked as "used for short-term reference" and not marked as "non-existing" in the view specified by viewIdX.

When LongTermFrameIdx equal to long_term_frame_dx is already assigned to a long-term reference frame or a long-term complementary reference field pair, that frame or complementary field pair and both of its fields are marked as "unused for reference".

When LongTermFrameIdx is already assigned to a non-paired reference field, and the field is not the complementary field of the picture specified by picNumX, that field is marked as "unused for reference".

Depending on field_pic-flag the value of LongTermFrameIdx is used to mark a picture from "used for short-term reference" to "used for long-term reference" as follows:

- If field_pic_flag is equal to 0, the marking of the short-term reference frame or short-term complementary reference field pair specified by picNumX in the view specified by viewIdX and both of its fields are changed from "used for short-term reference" to "used for long-term reference" and assigned LongTermFrameIdx equal to long_term_frame_idx.

- Otherwise (field_pic_flag is equal to 1), the marking of the short-term reference field specified by picNumX in the view specified by viewIdX is changed from "used for short-term reference" to "used for long-term reference" and assigned LongTermFrameIdx equal to long_term_frame_idx. When the field is part of a reference frame or a complementary reference field pair, and the other field of the same reference frame or complementary reference field pair is also marked as "used for long-term reference", the reference frame or complementary reference field pair is also marked as "used for long-term reference" and assigned LongTermFrameIdx equal to long_term_frame_idx.

When the MMCO equals 4, such a situation is invoked to change the status of a reference picture from a "used for long term reference" to "usused for reference" when a LongTermFrameIdx value is larger than the value associated with max_long_term_frame_idx_plus1-1.

The variable **MaxLongTermFrameIdx** is determined as follows:

If max_long_term_frame_idx_plus1 is equal to 0, MaxLongTermFrameIdx is set equal to "no long-term frame indices".

Otherwise (max_long_term_frame_idx_plus1 is greater than 0), MaxLongTermFrameIdx is set equal to max_long_term_frame_idx_plus1 - 1.

Note, the memory_Management_control_operation command equal to 4 can be used to mark long-term reference pictures as "unused for reference". The frequency of transmitting max_long_teim_frame_idx_plus1 is not specified by this specification, however and may be selected by the designer of a coder. However, the encoder should send a memory_Management_control_operation command equal to 4 upon receiving an error message, such as an intra refresh request message.

The MMCO being equal to 5 represents a situation where all of the reference pictures in a view which are specified by a viewIdx (as derived above), are marked as "unused for reference". That is, this MMCO provides the coder with the function of changing all of the pictures for a particular view (without having to identify each reference picture specifically). This type of function may be invoked to change the status of all the reference pictures that are of the same view as a picture currently being coded. Similarly, this command can be invoked to change the statuses of reference pictures of a particular view which are not the same as the view associated with a picture currently being coded.

Having the MMCO being equal to 6 represents the circumstance of having all reference pictures in all views. other than the view associated with a current view having their statuses changed to "unused for reference" and having the MaxLongTermFrameIdx variable being set to "no long-term frame indicies". The command effectively controls the DPB to eventual clear out all of the reference pictures which are for views not associated with the view for a picture currently being coded. As noted above, the MMCO being equal to 5 is to change the status of the reference pictures associated with a particular view, while the present MMCO (being equal to 6) affects all of the reference pictures which are associated with views which are not the same as the view of a picture being coded.

The MMCO being equal to 7 represents the situation of having the status of a reference picture being changed from "long-term reference picture" to "used for short-term reference". Such a reference picture is associated with a view which is different than the view associated with a picture currently being coded.

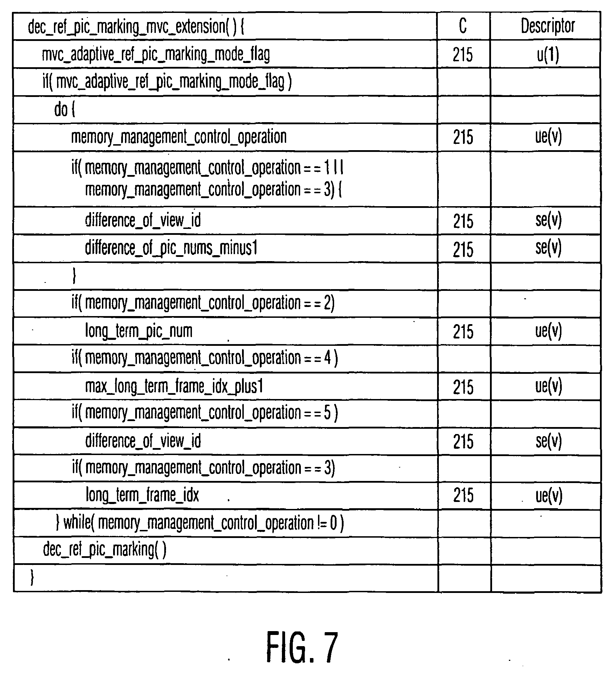

FIG. 7 presents an alternative embodiment of the principles of the present invention where a syntax element **difference_of_pics_nums_minus1** is presented (instead of using the syntax element **difference_of_pic_nums**). The implication of such a change is for the situation when one cannot select a picture with a picNumX that is larger than the picNumX of the current picture. The MMCOs associated with this embodiment operate the same as identified above (in Table 2).

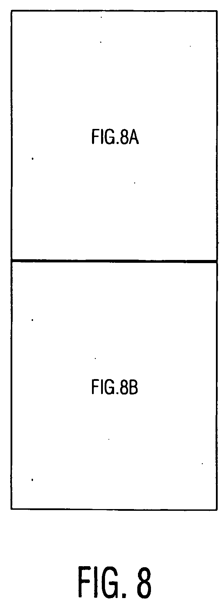

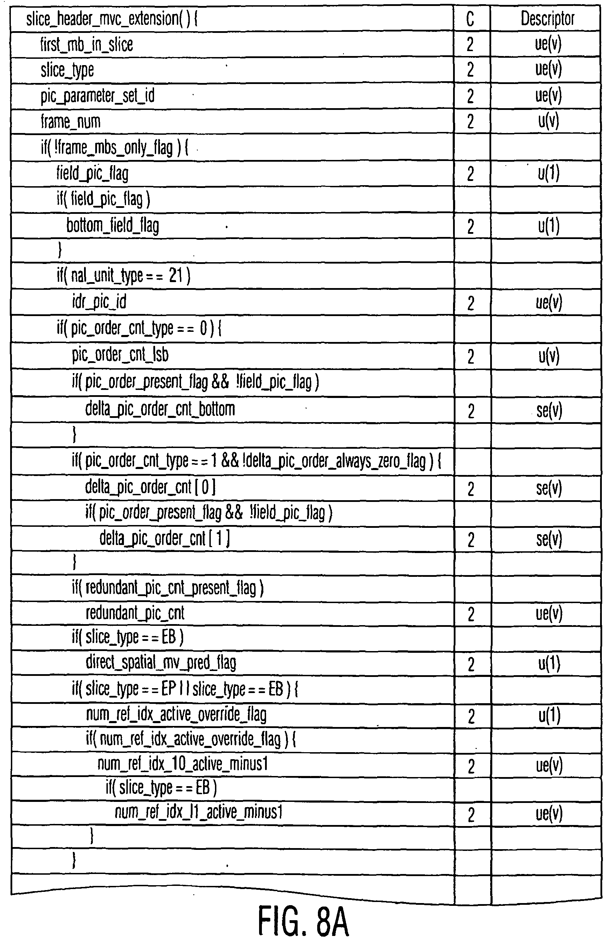

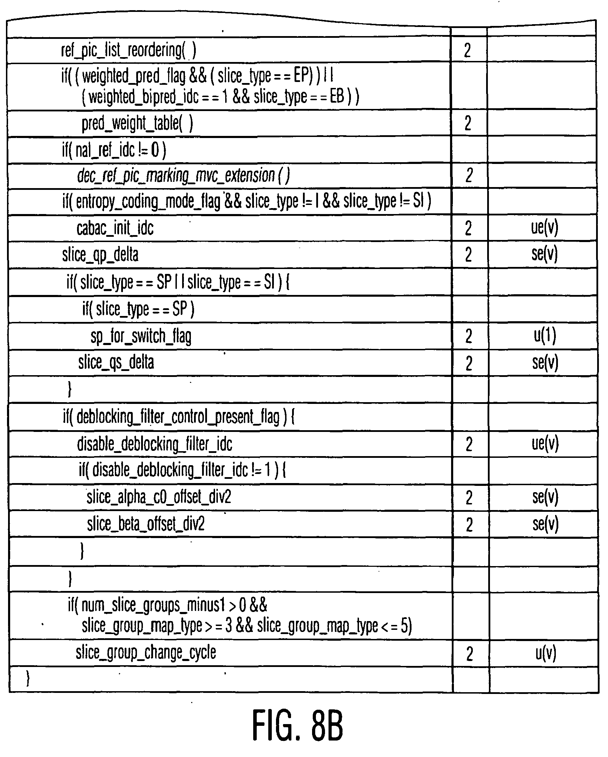

FIG. 8 presents an alternative embodiment of the principles of the present invention where the picture header (such as a slice header) commands are modified as to call out a syntax element command **slice_header_mvc_extension()** during the time when a picture is being coded in an AVC operation. That is, the MMCQ commands for multiviews may take place in this embodiment during the AVC encoding (where all reference pictures different views may be considered) instead of what was presented previously were references pictures of a view different than a picture being considered would be considered.

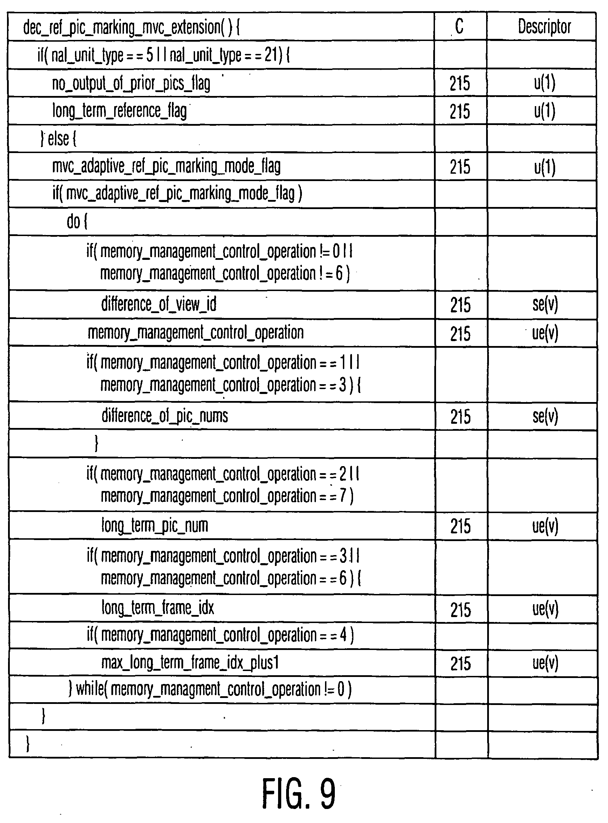

FIG. 9 discloses the composition of the syntax element command **dec_ref_pic_marking_mvc_extension().** This new syntax (as called in the picture header/slice header as shown in FIG. 8) is used to mark pictures that are in a view other than the current view by setting the appropriate difference_of_view_id syntax. In order to allow the reference pictures associated with view associated with a picture bering coded to have their memory statuses changed, the difference_of_view_id syntax is set to 0. This proposed syntax element will replace the existing AVC function for DPB management using the command def_ref_pic_marking. Various syntax elements associated with dec_ref_pic_marking_mvc_extension() are explained below.

**mvc_adaptive_ref_pic_marking_mode_flag** which is used to select between the reference marking mode of a picture that is currently being coded. The flag at "0" represents a sliding window reference picture marking mode, where short term reference pictures are assigned a FIFO basis in the DPB. The flag at "1" represents an adaptive reference picture marking mode, where elements may be provided to mark reference pictures as being "unused for reference" and to assign "long-term frame indices".

mvc_adaptive_ref_pic_marking_mode_flag shall be equal to 1 when the number of frames, complementary field pairs, and non-paired fields that are currently marked as "used for long-term reference" is equal to Max( num_ref_frames, 1).

memory_management_control_operation (MMCO) specifies a control operation to be applied to affect the reference picture marking. The MMCO syntax element is followed by data necessary for the operation specified by the value of MMCO. The values and control operations associated with called MMCO are shown in Table 3 (below). The MMCO syntax elements in the present embodiment are processed by the decoding process in the order in which they appear in the slice header, and the semantics constraints expressed for each memory_management_control_operation apply at the specific position in that order at which that individual MMCO is processed.

For interpretation of memory_management_control_operation, the term reference picture is interpreted as follows.

- If the current picture is a frame, the term reference picture refers either to a reference frame or a complementary reference field pair.

- Otherwise (the current picture is a field), the term reference picture refers either to a reference field or a field of a reference frame.

memory_management_control_operation shall not be equal to 1 in a slice header unless the specified reference picture is marked as "used for short-term reference" when the memory_management_control_operation is processed by the decoding process.

memory_management_control_operation shall not be equal to 2 in a slice header unless the specified long-term picture number refers to a reference picture that is marked as "used for long-term reference" when the memory_management_control_operation is processed by the decoding process.

memory_management_control_operation shall not be equal to 3 in a slice header unless the specified reference picture is marked as "used for short-term reference" when the memory_management_control_operation is processed by the decoding process.

memory_management_control_operation shall not be equal to 3, 5 or 6 if the value of the variable MaxLongTermFrameIdx is equal to "no long-term frame indices" when the memory_management_control_operation is processed by the decoding process.

When decoding a field and a memory_management_control_operation command equal to 3 is present that assigns a long-term frame index to a field that is part of a short-term reference frame or part of a short-term complementary reference field pair, another memory_management_control_operation command to assign the same long-term frame index to the other field of the same frame or complementary reference field pair shall be present in the same decoded reference picture marking syntax structure.

Note, the above requirement must be fulfilled even when the field referred to by the memory_management_control_operation equal to 3 is subsequently marked as "unused for reference" (for example when a memory_management_control_operation equal to 2 is present in the same slice header that causes the field to be marked as "unused for reference").

When the first field (in decoding order) of a complementary reference field pair includes a long_term_reference_flag equal to 1 or a memory_management_control_operation command equal to 6, the decoded reference picture marking syntax structure for the other field of the complementary reference field pair shall contain a memory_management_control_operation command equal to 6 that assigns the same long-term frame index to the other field.

Note, that the above requirement must be fulfilled even when the first field of the complementary reference field pair is subsequently marked as "unused for reference" (for example, when a memory_management_control_operation equal to 2 is present in the slice header of the second field that causes the first field to be marked as "unused for reference").

**difference_of_view_id** is used to derive the view_id to which the current memory_management_control_operation is applicable.

**difference_of_pic_nums** is used to assign a long-term frame index to a short-term reference picture or to mark a short-term reference picture as "unused for reference". When the associated memory_management_control_operation is processed by the decoding process, the resulting picture number derived from difference_of_pic_nums shall be a picture number assigned to one of the reference pictures marked as "used for reference" and not previously assigned to a long-term frame index. The resulting picture number is constrained as follows:

- If field_pic_flag is equal to 0, the resulting picture number shall be one of the set of picture numbers assigned to reference frames or complementary reference field. pairs. Note, when field_pic_flag is equal to 0, the resulting picture number must be a picture number assigned to a complementary reference field pair in which both fields are marked as "used for reference" or a frame in which both fields are marked as "used for reference". In particular, when field_pic_flag is equal to 0, the marking of a non-paired field or a frame in which a single field is marked as "used for reference" cannot be affected by a memory_management_control_operation equal to 1.

- Otherwise (field_pic_flag is equal to 1), the resulting picture number shall be one of the set of picture numbers assigned to reference fields.

**long_term_pic-num is used** (with memory_management_control_operation equal to 2) to mark a long-term reference picture as "unused for reference". When the associated memory_management_control_operation is processed by the decoding process, long_term_pic_num shall be equal to a long-term picture number assigned to one of the reference pictures that is currently marked as "used for long-term reference".

The resulting long-term picture number is constrained as follows.

- If field_pic_flag is equal to 0, the resulting long-term picture number shall be one of the set of long-term picture numbers assigned to reference frames or complementary reference field pairs. Note, when field_pic_flag is equal to 0, the resulting long-term picture number must be a long-term picture number assigned to a complementary reference field pair in which both fields are marked as "used for reference" or a frame in which both fields are marked as "used for reference". In particular, when field_pic_flag is equal to 0, the marking of a non-paired field or a frame in which a single field is marked as "used for reference" cannot be affected by a memory_management_control_operation equal to 2.

- Otherwise (field_pic_flag is equal to 1), the resulting long-term picture number shall be one of the set of long-term picture numbers assigned to reference fields.

**long_term_frame_idx** is used (with memory_management_control_operation equal to 3 or 6) to assign a long-term frame index to a picture. When the associated memory_management_control_operation is processed by the decoding process, the value of long_term_frame_idx shall be in the range of 0 to MaxLongTermFrameIdx, inclusive.

The syntax difference_of_pic_nums, allows to select pictures with a picNum that is larger that the picNum of the current picture. This makes marking more efficient.

The decoded reference picture marking process is described below for the different MMCO commands:

Let viewld be specified by

$$viewIdX = CurrViewId - ( difference\_of\_view\_id ).$$

All the MMCO commands (as shown in Table 3 below) are applied to the viewld derived above as viewldX.

TABLE 3

| memory_management_control_operation | Memory Management Control Operation |
|---|---|
| 0 | End memory_management_control_operation syntax element loop |
| 1 | Mark a short-term reference picture as "unused for reference" |
| 2 | Mark a long-term reference picture as "unused for reference" |

(continued)

| memory_management_control_operation | Memory Management Control Operation |
|---|---|
| 3 | Mark a short-term reference picture as "used for long-term reference" and assign a long-term frame index to it |
| 4 | Specify the maximum long-term frame index and mark all long-term reference pictures having long-term frame indices greater than the maximum value as "unused for reference" |
| 5 | Mark all reference pictures as "unused for reference" and set the MaxLongTermFrameIdx variable to "no long-term frame indices" |
| 6 | Mark the current picture as "used for long-term reference" and assign a long-term frame index to it |
| 7 | Mark a long-term reference picture in a view other than itself as "used for short-term reference" |

When the MMCO is equal to 0, the marking of picture headers (slice headers, for example), is ended.

When the MMCO is equal to 1, a particular reference frame will have the status associated with it changed from being a "short-term reference picture" to being "unused for reference".
Let picNumX be specified by

$$picNumX = CurrPicNum - ( difference\_of\_pic\_nums).$$

Additionally, depending on the field_pic_flag, the value of picNumX is used to mark a short-term reference picture as "unused for reference" as follows:

- If field_pic_flag is equal to 0, the short-term reference frame or short-term complementary reference field pair specified by picNumX in the view specified by viewIdX and both of its fields are marked as "unused for reference".

- Otherwise (field_pic_flag is equal to 1), the short-term reference field specified by picNumX in the view specified by viewIdX is marked as "unused for reference". When that reference field is part of a reference frame or a complementary reference field pair, the frame or complementary field pair is also marked as "unused for reference", but the marking of the other field is not changed.

When the MMCO is equal to 2, a particular reference picture will have the status associated with it changed from being "long-term reference picture" to being "unused for reference". Depending on field_pic_flag the value of LongTermPicNum is used to mark a long-term reference picture as "unused for reference" as follows.

- If field_pic_flag is equal to 0, the long-term reference frame or long-term complementary reference field pair having LongTermPicNum equal to long_term_pic_num and both of its fields are marked as "unused for reference".

- Otherwise (field_pic_flag is equal to 1), the long-term reference field specified by LongTermPicNum equal to long_term_pic_num is marked as "unused for reference". When that reference field is part of a reference frame or a complementary reference field pair, the frame or complementary field pair is also marked as "unused for reference", but the marking of the other field is not changed.

When the MMCO is equal to 3, a particular reference frame is assigned to a LongTermFrameIdx assigning a short-term reference picture to a long-term reference picture. Given the syntax element difference_of_pic_nums and difference_of_view_id, the variable picNumX and viewIdX are obtained as specified above. picNumX shall refer to a frame or complementary reference field pair or non-paired reference field marked as "used for short-term reference" and not marked as "non-existing" in the view specified by viewIdX.

When LongTermFrameIdx equal to long_term_frame_idx is already assigned to a long-term reference frame or a long-term complementary reference field pair, that frame or complementary field pair and both of its fields are marked as "unused for reference". When LongTermFrameIdx is already assigned to a non-paired reference field, and the field is not the complementary field of the picture specified by picNumX, that field is marked as "unused for reference".

Depending on field_pic_flag the value of LongTermFrameIdx is used to mark a picture from "used for short-term reference" to "used for long-term reference" as follows.

- If field_pic_flag is equal to 0, the marking of the short-term reference frame or short-term complementary reference field pair specified by picNumX in the view specified by viewIdX and both of its fields are changed from "used for short-term reference" to "used for long-term reference" and assigned LongTermFrameIdx equal to long_term_frame_idx.

- Otherwise (field_pic_flag is equal to 1), the marking of the short-term reference field specified by picNumX in the view specified by viewIdX is changed from "used for short-term reference" to "used for long-term reference" and assigned LongTermFrameIdx equal to long_term_frame_idx. When the field is part of a reference frame or a complementary reference field pair, and the other field of the same reference frame or complementary reference field pair is also marked as "used for long-term reference", the reference frame or complementary reference field pair is also marked as "used for long-term reference" and assigned LongTermFrameIdx equal to long_term_frame_idx.

When the MMCO is equal to 4, a maximum long-term frame index value is specified, whereby all of reference frames which are identified as long term reference frames and have frame indices greater than the maximum value are categorized as being "unused for reference". Specifically (within the nomenclature of the function call), all pictures for which LongTermFrameIdx is greater than max_long_term_frame_idx_plus1-1 and that are marked as "used for long-term reference" are marked as "unused for reference".

The variable **MaxLongTermFrameIdx** is derived as follows:

- If max_long_term_frame_idx_plus1 is equal to 0, MaxLongTermFrameIdx is set equal to "no long-term frame indices".

- Otherwise (max_long_term_frame_idx_plus1 is greater than 0), MaxLongTermFrameIdx is set equal to max_long_term_frame_idx_plus1 - 1. It is noted that the present MMCO can be used to mark long-term reference pictures as "unused for reference". The frequency of transmitting max_long_term_frame_idx_plus1 should be decided by the designer of the coder which complies with this invention. However, the coder should send a memory_management_control_operation command equal to 4 upon receiving an error message, such as an intra refresh request message.

When the MMCO is equal to 5, the coder will mark all reference pictures in a view specified by viewIdx (a specific view) as "unused for reference" and set the MaxLongTermFrameIdx variable equal to "no long-term frame indices". This means, the reference pictures identified with a particular view are set to being "unused for reference", where before such reference pictures were marked as being "long-term".

When the MMCO is equal to 6, the current picture being coded is marked as being "used for long-term" and a long-term frame index is assigned to the picture. Specifically, when a variable LongTermFrameIdx equal to long_term_frame_idx is already assigned to a long-term reference frame or a long-term complementary reference field pair, that frame or complementary field pair and both of its fields are marked as "unused for reference". When LongTermFrameIdx is already assigned to a non-paired reference field, and the field is not the complementary field of the current picture, that field is marked as "unused for reference".

The current picture is marked as "used for long-term reference" and assigned LongTermFrameIdx equal to long_term_frame_idx.

When field_pic_flag is equal to 0, both its fields are also marked as "used for long-term reference" and assigned LongTermFrameIdx equal to long_term_frame_idx.

When field_pic_flag is equal to 1 and the current picture is the second field (in decoding order) of a complementary reference field pair, and the first field of the complementary reference field pair is also currently marked as "used for long-term reference), the complementary reference field pair is also marked as "used for long-term reference" and assigned LongTermFrameIdx equal to long_term_frame_idx.

After marking the current decoded reference picture, the total number of frames with at least one field marked as "used for reference", plus the number of complementary field pairs with at least one field marked as "used for reference", plus the number of non-paired fields marked as "used for reference" shall not be greater than Max( num_ref_frames, 1). Please note, that under some circumstances, the above statement may impose a constraint on the order in which a memory_management_control_operation syntax element equal to 6 can appear in the decoded reference picture marking syntax relative to a memory_management_control_operation syntax element equal to 1, 2, or 4.

When the MMCO is equal to 7, a long term reference picture identified by the long_term_pic_num in a view identified by viewIdX is marked as "used for short-term reference". This means, that a particular frame (identified by a pic number) and a specified view, will have its status changed from being a "long-term reference picture" to being a "short-term reference picture".

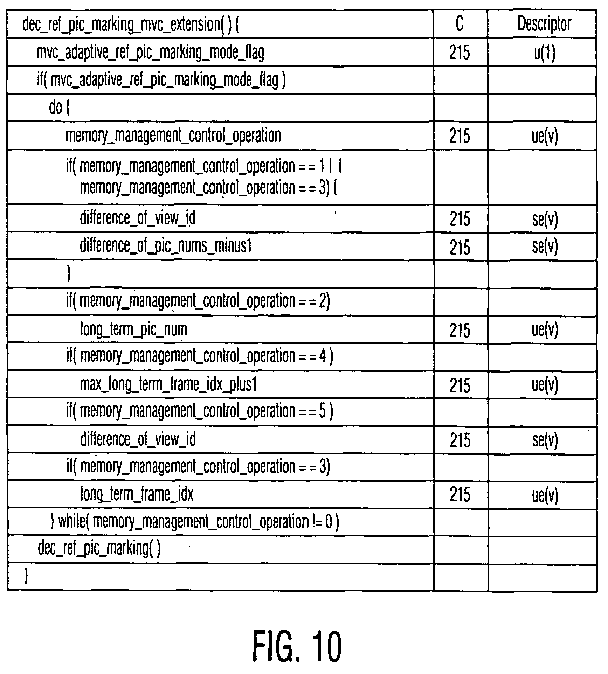

An alternative embodiment of the present invention is disclosed in accordance with the syntax element shown in FIG. 10, where a **difference-of_pic_nums** or **difference_of_pic_nums_minus1** is transmitted based on the value of the **difference_of_view_id.** This solution is proposed when using MMCO commands just for the temporal case instead of using the difference_of_pic_nums syntax element described for FIG 8.

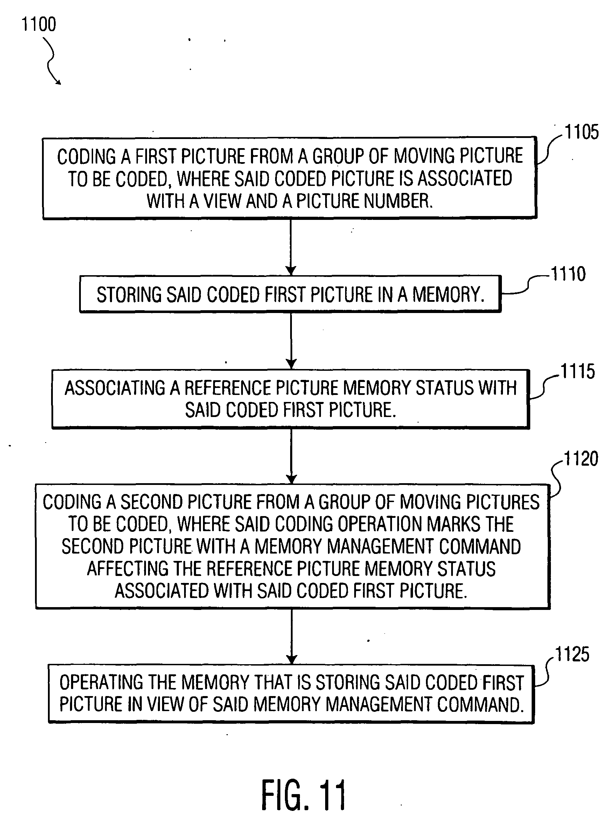

FIG. 11 discloses a block diagram 1100 of a generalized reference picture marking method in accordance with principles of the present invention.

Step 1105 represents the generalized concept of coding a picture (where the coding operation typically is encoding the picture from a group of video based moving pictures). This operation may represent the decoding of a coded picture, too.

In the present step however, the picture being coded is associated with a particular view from a plurality of views which are used in a multi-view video coding system. The preferred embodiment makes use of the principles disclosed in the MVC video standard within the context of an AVC coder, but it is to be appreciated that other multiview video standards may be used. Importantly, the coded picture will associated with a picture ID number and a view ID number. The picture ID represents the coded pictures number in within a sequence of coded pictures. The coded picture will also have a view ID number which corresponds to the view in which the coded picture is associated with (between 1 to n, n=the total number of views). For example, a coded picture that is associated with a view "2" will be known as having a view ID number of "2".

In step 1110, the coded picture is stored in a memory device (such as the DPB) and the coded picture is assigned a memory status. The coded picture is stored so that the picture may be used as a reference picture. As described above, a coded picture may have at least three different memory statuses associated with:

"Long-Term Reference Picture" represents when a coded picture is supposed to be stored as a reference picture. The coded picture which is designated as a long-term reference picture is assigned an index number (in a long-term picture index. This picture is supposed to be retained for the time being, so that such a picture may be used as a reference picture when coding future pictures.

"Short-Term Reference Picture" represents a coded picture as is supposed to be retained for a short time, as a reference picture. In this case, the reference picture will be moved out of the memory device (DPB) when room is required.

"Unused as Reference" represents when a coded picture is not meant to be used as a reference picture. In this case, the DPB may remove the reference picture when space is required (using LIFO/FIFO), or erased from the DPB directly.

It is possible that a picture designated as being unused as reference may be directly deleted and never stored in the DPB during steps 1110 and 1115.

In step 1120, a second video picture is being coded. At this time, the video picture is marked with a memory management command operation (as described with other embodiments), where the MMCO affects the reference picture stored in the memory device used for storing reference pictures such as the DPB.

As described earlier, different MMCOs may be employed to decide how to change the memory status associated with a reference picture. Such a change may be made based upon whether the picture currently being coded has a same/different view from the stored reference picture (for example, all the pictures with the same view ID of are changed at the same time, as this represents a global change). The change of the memory status associated with a picture may be done directly, where a particular stored reference picture is identified and the MMCO specifies that the memory status of the picture will change (for example, changing between the memory statuses of "long-term reference", "short-term reference", and "unused as reference", this representing a local change).

Additionally, as described above, the various implementations of the invention allow for situations where the view ID of the picture currently being coded will affect whether pictures can only be changed for reference pictures with a different view ID (across different views) or for reference pictures which have the same view ID as the picture being coded (for the specific view).

Step 1125 is the implementation of the MCCO command, where the memory storage device storage the reference picture implements the memory status associated with the reference picture. These types of operations are also described above.

These and other features and advantages of the present principles may be readily ascertained by one of ordinary skill in the pertinent art based on the teachings herein. It is to be understood that the teachings of the present principles may be implemented in various forms of hardware, software, firmware, special purpose processors, or combinations thereof.

Most preferably, the teachings of the present principles are implemented as a combination of hardware and software. Moreover, the software may be implemented as an application program tangibly embodied on a program

EP 2 087 738 B1

storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code: The various processes and functions described herein may be either part of the microinstruction code or part of the application program, or any combination thereof, which may be executed by a CPU. In addition, various other peripheral units may be connected to the computer platform such as an additional data storage unit and a printing unit.

It is to be further understood that, because some of the constituent system components and methods depicted in the accompanying drawings are preferably implemented in software, the actual connections between the system components or the process function blocks may differ depending upon the manner in which the present principles are programmed. Given the teachings herein, one of ordinary skill in the pertinent art will be able to contemplate these and similar implementations or configurations of the present principles.

**Claims**

1.  A method for memory management of a first reference picture used in multiview video coding comprising the steps of:

    storing a first reference picture in a memory (1110), where the first reference picture is associated with a memory status and a view, said memory status is selected from long term reference frame, short term reference frame, and non-used for reference;
    coding a video picture together with information (1120) which affects the memory status of said stored first reference picture and all of reference pictures with the same view of said stored first reference picture, where the view associated with said first reference picture is different than a view associated with said coded video picture;
    storing a second reference picture in a memory (1110), where the second stored reference picture has a second view that is different than the view of the first reference picture and the view of the video picture being coded;
    assigning via a memory status change command a status to change the memory status of said first reference picture to a status for said first reference picture selected from: long term reference frame, short term reference frame, and non-used for reference frame, and
    a memory status of the second stored reference picture associated with a second view is not impacted by said memory status change command.

2.  The method of Claim 1, wherein said first reference picture is initially coded using an H.264 based coding operation and said memory status change is performed during a multiview coding operation.

3.  The method of Claim 1, wherein said first reference picture is coded and said change in said memory status is performed in a video coding operation that does both temporal and inter-view coding.

4.  The method of any one of Claims 1- 3 where a marking mode syntax element flag is called to select between the reference marking modes of said picture that is currently being coded.

5.  A coding apparatus for performing any of the methods claimed in Claims 1-4.

**Patentansprüche**

1.  Verfahren für das Speichermanagement eines ersten Referenzbilds, das in der Videocodierung mehrerer Ansichten verwendet wird, wobei das Verfahren die folgenden Schritte umfasst:

    Speichern eines ersten Referenzbilds in einem Speicher (1110), wobei dem ersten Referenzbild ein Speicherstatus und eine Ansicht zugeordnet werden, wobei der Speicherstatus aus einem Langzeitreferenz-Einzelbild, einem Kurzzeitreferenz-Einzelbild und nicht als Referenz verwendet ausgewählt wird;
    Codieren eines Videobilds zusammen mit Informationen (1120), die den Speicherstatus des gespeicherten ersten Referenzbilds und aller Referenzbilder mit derselben Ansicht wie das gespeicherte erste Referenzbild beeinflussen, wobei sich die dem ersten Referenzbild zugeordnete Ansicht von einer dem codierten Videobild zugeordneten Ansicht unterscheidet;
    Speichern eines zweiten Referenzbilds in einem Speicher (1110), wobei das zweite gespeicherte Referenzbild eine zweite Ansicht besitzt, die sich von der Ansicht des ersten Referenzbilds und von der Ansicht des Videobilds, das codiert wird, unterscheidet;

Zuweisen eines Status zum Ändern des Speicherstatus des ersten Referenzbilds über einen Speicherstatus-Änderungsbefehl auf einen Status für das erste Referenzbild, der ausgewählt wird aus: einem Langzeitreferenz-Einzelbild,

einem Kurzzeitreferenz-Einzelbild und nicht als Referenzeinzelbild verwendet, und

wobei ein Speicherstatus des zweiten gespeicherten Referenzbilds, das einer zweiten Ansicht zugeordnet ist, durch den Speicherstatus-Änderungsbefehl nicht beeinflusst wird.

2. Verfahren nach Anspruch 1, wobei das erste Referenzbild anfangs unter Verwendung einer auf H.264 beruhenden Codierungsoperation codiert wird und die Speicherstatusänderung während einer Codierungsoperation mehrerer Ansichten ausgeführt wird.

3. Verfahren nach Anspruch 1, wobei das erste Referenzbild codiert wird und die Änderung des Speicherstatus in einer Videocodierungsoperation ausgeführt wird, die sowohl eine zeitliche Codierung als auch eine Codierung zwischen Ansichten ausführt.

4. Verfahren nach einem der Ansprüche 1-3, wobei ein Markierungsmodus-Syntaxelement-Merker aufgerufen wird, um zwischen den Referenzmarkierungsmodi des Bilds, das gegenwärtig codiert wird, auszuwählen.

5. Codierungsvorrichtung zum Ausführen eines der Verfahren nach den Ansprüchen 1-4.

**Revendications**

1. Procédé de gestion de mémoire d'une première image de référence utilisée dans le codage de vidéo multivues comprenant les étapes suivantes :

stockage d'une première image de référence dans une mémoire (1110), où la première image de référence est associée à un statut de mémoire et une vue, ledit statut de mémoire étant sélectionné dans une image de référence à long terme, une image de référence à court terme et n'étant pas utilisé pour référence ;

codage d'une image vidéo avec des informations (1120) qui affectent le statut de mémoire de ladite première image de référence stockée et de toutes les images de référence avec la même vue de ladite première image de référence stockée, où la vue associée à ladite première image de référence est différente d'une vue associée à ladite image vidéo codée ;

stockage d'une deuxième image de référence dans une mémoire (1110), où ladite deuxième image de référence stockée possède une deuxième vue qui est différente de la vue de la première image de référence et de la vue de l'image vidéo codée ;

attribution via une commande de changement de statut de mémoire d'un statut pour changer le statut de mémoire de ladite première image de référence en un statut pour ladite première image de référence sélectionné dans une image de référence à long terme, une image de référence à court terme et n'étant pas utilisée pour référence , et

dans lequel un statut de mémoire de ladite deuxième image de référence stockée associée à une deuxième vue n'est pas impacté par ladite commande de changement de statut de mémoire.

2. Procédé selon la revendication 1, dans lequel ladite première image de référence est initialement codée à l'aide d'une opération de codage H.264 et ledit changement de statut de mémoire est effectué pendant une opération de codage multivues.

3. Procédé selon la revendication 1, dans lequel ladite première image de référence est codée et ledit changement dudit statut de mémoire est effectué pendant une opération de codage vidéo qui effectue un codage à la fois temporel et inter-vues.

4. Procédé selon l'une des revendications 1 à 3, dans lequel un élément de syntaxe de mode de marquage est codé.

5. Appareil de codage pour la mise en oeuvre d'un procédé selon l'une des revendications 1 à 4.

FIG. 1

200

215

DECODED PICTURE
BUFFER

210

CODED PICTURE
BUFFER

CODER

205

# FIG. 2

| dec_ref_pic_marking( ) { | C | Descriptor |
|---|---|---|
| if( nal_unit_type = = 5 I I nal_unit_type = = 21) { /* nal_unit_type 21 is specified in Annex Error! Reference source not found. */ | | |
| no_output_of_prior_pics_flag | 215 | u(1) |
| long_term_reference_flag | 215 | u(1) |
| } else { | | |
| adaptive_ref_pic_marking_mode_flag | 215 | u(1) |
| if( adaptive_ref_pic_marking_mode_flag ) | | |
| do { | | |
| memory_management_control_operation | 215 | ue(v) |
| if( memory_management_control_operation = = 1 I I memory_management_control_operation = = 3 ) | | |
| difference_of_pic_nums_minus] | 215 | ue(v) |
| if( memory_management_control_operation = = 2 ) | | |
| long_term_pic_num | 215 | ue(v) |
| if( memory_management_control_operation = = 3 I I memory_management_control_operation = = 6 ) | | |
| long_term_frame_idx | 215 | ue(v) |
| if( memory_management_control_operation = = 4 ) | | |
| max_long_term_frame_idx_plus1 | 215 | ue(v) |
| } while( memory_management_control_operation != 0) | | |
| } | | |
| } | | |

# FIG. 3

| seq_parameter_set_mvc_extension( ) { | C | Descriptor |
|---|---|---|
| num_views_minus_1 | | ue(v) |
| for(i = 0; i <= num_views_minus_1 ; i++) { | | |
| num_multiview_refs_for_list0[i] | | ue(v) |
| num_multiview_refs_for_list1[i] | | ue(v) |
| for( j = 0; j < num_multiview_refs_for_list0; j++ ) { | | |
| anchor_reference_view_for_list_0[i][j] | | u(10) |
| non_anchor_reference_view_for_list_0[i][j] | | u(10) |
| } | | |
| for( j = 0; j < num_multiview_refs_for_list1; j++ ) { | | |
| anchor_reference_view_for_list_1[i][j] | | u(10) |
| non_anchor_reference_view_for_list_1[i][j] | | u(10) |
| } | | |
| } | | |

# FIG. 4

| dec_ref_pic_marking_mvc_extension( ) { | C | Descriptor |
|---|---|---|
| mvc_adaptive_ref_pic_marking_mode_flag | 215 | u(1) |
| If( mvc_adaptive_ref_pic_marking_mode_flag ) | | |
| do { | | |
| memory_management_control_operation | 215 | ue(v) |
| if( memory_management_control_operation == 1 \|\| memory_management_control_operation == 3 \|\| memory_management_control_operation == 7) { | | |
| difference_of_view_id | 215 | se(v) |
| difference_of_pic_nums | 215 | se(v) |
| } | | |
| if( memory_management_control_operation == 2 \|\| memory_management_control_operation == 7) | | |
| long_term_pic_num | 215 | ue(v) |
| if( memory_management_control_operation == 4 ) | | |
| max_long_term_frame_idx_plus1 | 215 | ue(v) |
| if( memory_management_control_operation == 5 ) | | |
| difference_of_view_id_minus1 | 215 | ue(v) |
| if( memory_management_control_operation == 3) | | |
| long_term_frame_idx | 215 | ue(v) |
| } while( memory_management_control_operation != 0) | | |
| dec_ref_pic_marking( ) | | |
| } | | |

## FIG. 5

FIG.6A

FIG.6B

FIG. 6

| slice_header_mvc_extension( ) { | C | Descriptor |
|---|---|---|
| first_mb_in_slice | 2 | ue(v) |
| slice_type | 2 | ue(v) |
| pic_parameter_set_id | 2 | ue(v) |
| frame_num | 2 | u(v) |
| if( !frame_mbs_only_flag ) { | | |
| field_pic_flag | 2 | u(1) |
| if( field_pic_flag ) | | |
| bottom_field_flag | 2 | u(1) |
| } | | |
| if( nal_unit_type == 21 ) | | |
| idr_pic_id | 2 | ue(v) |
| if( pic_order_cnt_type == 0 ) { | | |
| pic_order_cnt_lsb | 2 | u(v) |
| if( pic_order_present_flag && !field_pic_flag ) | | |
| delta_pic_order_cnt_bottom | 2 | se(v) |
| } | | |
| if( pic_order_cnt_type == 1 && !delta_pic_order_always_zero_flag ) { | | |
| delta_pic_order_cnt [ 0 ] | 2 | se(v) |
| if( pic_order_present_flag && !field_pic_flag ) | | |
| delta_pic_order_cnt [ 1 ] | 2 | se(v) |
| } | | |
| if( redundant_pic_cnt_present_flag ) | | |
| redundant_pic_cnt | 2 | ue(v) |
| if( slice_type == EB ) | | |
| direct_spatial_mv_pred_flag | 2 | u(1) |
| if( slice_type == EB || slice_type == EB ) { | | |
| num_ref_idx_active_override_flag | 2 | u(1) |
| if( num_ref_idx_active_override_flag ) { | | |
| num_ref_idx_10_active_minus1 | 2 | ue(v) |
| if( slice_type == EB ) | | |
| num_ref_idx_l1_active_minus1 | 2 | ue(v) |
| } | | |
| } | | |
| | | |

# FIG. 6A

| | | |
|---|---|---|
| ref_pic_list_reordering( ) | 2 | |
| if( ( weighted_pred_flag && ( slice_type = = EP ) ) I I<br>( weighted_bipred_idc = = 1 && slice_type = = EB ) ) | | |
| pred_weight_table( ) | 2 | |
| if( nal_ref_idc != 0 ) | | |
| *dec_ref_pic_marking_mvc_extension ( )* | *2* | |
| if( entropy_coding_mode_flag && slice_type != I && slice_type != SI ) | | |
| cabac_init_idc | 2 | ue(v) |
| slice_qp_delta | 2 | se(v) |
| if( slice_type = = SP I I slice_type = = SI ) { | | |
| if( slice_type = = SP ) | | |
| sp_for_switch_flag | 2 | u(1) |
| slice_qs_delta | 2 | se(v) |
| } | | |
| if( deblocking_filter_control_present_flag ) { | | |
| disable_deblocking_filter_idc | 2 | ue(v) |
| if( disable_deblocking_filter_idc != 1 ) { | | |
| slice_alpha_c0_offset_div2 | 2 | se(v) |
| slice_beta_offset_div2 | 2 | se(v) |
| } | | |
| } | | |
| if( num_slice_groups_minus1 > 0 &&<br>slice_group_map_type > = 3 && slice_group_map_type < = 5) | | |
| slice_group_change_cycle | 2 | u(v) |
| } | | |

## FIG. 6B

| dec_ref_pic_marking_mvc_extension( ) { | C | Descriptor |
|---|---|---|
| mvc_adaptive_ref_pic_marking_mode_flag | 215 | u(1) |
| if( mvc_adaptive_ref_pic_marking_mode_flag ) | | |
| do { | | |
| memory_management_control_operation | 215 | ue(v) |
| if( memory_management_control_operation = = 1 I I memory_management_control_operation = = 3) { | | |
| difference_of_view_id | 215 | se(v) |
| difference_of_pic_nums_minus1 | 215 | se(v) |
| } | | |
| if( memory_management_control_operation = = 2) | | |
| long_term_pic_num | 215 | ue(v) |
| if( memory_management_control_operation = = 4 ) | | |
| max_long_term_frame_idx_plus1 | 215 | ue(v) |
| if( memory_management_control_operation = = 5 ) | | |
| difference_of_view_id | 215 | se(v) |
| if( memory_management_control_operation = = 3) | | |
| long_term_frame_idx | 215 | ue(v) |
| } while( memory_management_control_operation != 0 ) | | |
| dec_ref_pic_marking( ) | | |
| } | | |

# FIG. 7

FIG.8A

FIG.8B

# FIG. 8

EP 2 087 738 B1

| slice_header_mvc_extension( ) { | C | Descriptor |
|---|---|---|
| first_mb_in_slice | 2 | ue(v) |
| slice_type | 2 | ue(v) |
| pic_parameter_set_id | 2 | ue(v) |
| frame_num | 2 | u(v) |
| if( !frame_mbs_only_flag ) { | | |
| field_pic_flag | 2 | u(1) |
| if( field_pic_flag ) | | |
| bottom_field_flag | 2 | u(1) |
| } | | |
| if( nal_unit_type = = 21 ) | | |
| idr_pic_id | 2 | ue(v) |
| if( pic_order_cnt_type = = 0 ) { | | |
| pic_order_cnt_lsb | 2 | u(v) |
| if( pic_order_present_flag && !field_pic_flag ) | | |
| delta_pic_order_cnt_bottom | 2 | se(v) |
| } | | |
| if( pic_order_cnt_type = = 1 && !delta_pic_order_always_zero_flag ) { | | |
| delta_pic_order_cnt [ 0 ] | 2 | se(v) |
| if( pic_order_present_flag && !field_pic_flag ) | | |
| delta_pic_order_cnt [ 1 ] | 2 | se(v) |
| } | | |
| if( redundant_pic_cnt_present_flag ) | | |
| redundant_pic_cnt | 2 | ue(v) |
| if( slice_type = = EB ) | | |
| direct_spatial_mv_pred_flag | 2 | u(1) |
| if( slice_type = = EP | | slice_type = = EB ) { | | |
| num_ref_idx_active_override_flag | 2 | u(1) |
| if( num_ref_idx_active_override_flag ) { | | |
| num_ref_idx_10_active_minus1 | 2 | ue(v) |
| if( slice_type = = EB ) | | |
| num_ref_idx_l1_active_minus1 | 2 | ue(v) |
| } | | |
| } | | |

FIG. 8A

| | | |
|---|---|---|
| ref_pic_list_reordering( ) | 2 | |
| if( ( weighted_pred_flag && ( slice_type = = EP) ) | | ( weighted_bipred_idc = = 1 && slice_type = = EB ) ) | | |
| pred_weight_table( ) | 2 | |
| if( nal_ref_idc != 0 ) | | |
| dec_ref_pic_marking_mvc_extension ( ) | 2 | |
| if( entropy_coding_mode_flag && slice_type != I && slice_type != SI ) | | |
| cabac_init_idc | 2 | ue(v) |
| slice_qp_delta | 2 | se(v) |
| if( slice_type = = SP | | slice_type = = SI ) { | | |
| if( slice_type = = SP ) | | |
| sp_for_switch_flag | 2 | u(1) |
| slice_qs_delta | 2 | se(v) |
| } | | |
| if( deblocking_filter_control_present_flag ) { | | |
| disable_deblocking_filter_idc | 2 | ue(v) |
| if( disable_deblocking_filter_idc != 1 ) { | | |
| slice_alpha_c0_offset_div2 | 2 | se(v) |
| slice_beta_offset_div2 | 2 | se(v) |
| } | | |
| } | | |
| if( num_slice_groups_minus1 > 0 && slice_group_map_type > = 3 && slice_group_map_type < = 5) | | |
| slice_group_change_cycle | 2 | u(v) |
| } | | |

## FIG. 8B

| dec_ref_pic_marking_mvc_extension( ) { | C | Descriptor |
|---|---|---|
| if( nal_unit_type = = 5 I I nal_unit_type = = 21) { | | |
| no_output_of_prior_pics_flag | 215 | u(1) |
| long_term_reference_flag | 215 | u(1) |
| } else { | | |
| mvc_adaptive_ref_pic_marking_mode_flag | 215 | u(1) |
| if( mvc_adaptive_ref_pic_marking_mode_flag ) | | |
| do { | | |
| if( memory_management_control_operation != 0 I I memory_management_control_operation ! = 6 ) | | |
| difference_of_view_id | 215 | se(v) |
| memory_management_control_operation | 215 | ue(v) |
| if( memory_management_control_operation = = 1 I I memory_management_control_operation = = 3 ) { | | |
| difference_of_pic_nums | 215 | se(v) |
| } | | |
| if( memory_management_control_operation = = 2 I I memory_management_control_operation = = 7 ) | | |
| long_term_pic_num | 215 | ue(v) |
| if( memory_management_control_operation = = 3 I I memory_management_control_operation = = 6 ) { | | |
| long_term_frame_idx | 215 | ue(v) |
| if( memory_management_control_operation = = 4 ) | | |
| max_long_term_frame_idx_plus1 | 215 | ue(v) |
| } while( memory_managment_control_operation != 0 ) | | |
| } | | |
| } | | |

# FIG. 9

| dec_ref_pic_marking_mvc_extension( ) { | C | Descriptor |
|---|---|---|
| mvc_adaptive_ref_pic_marking_mode_flag | 215 | u(1) |
| if( mvc_adaptive_ref_pic_marking_mode_flag ) | | |
| do { | | |
| memory_management_control_operation | 215 | ue(v) |
| if( memory_management_control_operation = = 1 I I memory_management_control_operation = = 3) { | | |
| difference_of_view_id | 215 | se(v) |
| difference_of_pic_nums_minus1 | 215 | se(v) |
| } | | |
| if( memory_management_control_operation = = 2) | | |
| long_term_pic_num | 215 | ue(v) |
| if( memory_management_control_operation = = 4 ) | | |
| max_long_term_frame_idx_plus1 | 215 | ue(v) |
| if( memory_management_control_operation = = 5 ) | | |
| difference_of_view_id | 215 | se(v) |
| if( memory_management_control_operation = = 3) | | |
| long_term_frame_idx | 215 | ue(v) |
| } while( memory_management_control_operation != 0 ) | | |
| dec_ref_pic_marking( ) | | |
| } | | |

# FIG. 10

1100

1105
CODING A FIRST PICTURE FROM A GROUP OF MOVING PICTURE TO BE CODED, WHERE SAID CODED PICTURE IS ASSOCIATED WITH A VIEW AND A PICTURE NUMBER.

1110
STORING SAID CODED FIRST PICTURE IN A MEMORY.

1115
ASSOCIATING A REFERENCE PICTURE MEMORY STATUS WITH SAID CODED FIRST PICTURE.

1120
CODING A SECOND PICTURE FROM A GROUP OF MOVING PICTURES TO BE CODED, WHERE SAID CODING OPERATION MARKS THE SECOND PICTURE WITH A MEMORY MANAGEMENT COMMAND AFFECTING THE REFERENCE PICTURE MEMORY STATUS ASSOCIATED WITH SAID CODED FIRST PICTURE.

1125
OPERATING THE MEMORY THAT IS STORING SAID CODED FIRST PICTURE IN VIEW OF SAID MEMORY MANAGEMENT COMMAND.

FIG. 11

**REFERENCES CITED IN THE DESCRIPTION**

**Patent documents cited in the description**

- EP 2005753 A1
- WO 2007114612 A2
- EP 2039170 A2
- WO 2008005575 A2

**Non-patent literature cited in the description**

- **A. VETRO ; Y. SU ; H. KIMATA ; A. SMOLIC.** Joint Multiview Video Model (JMVM) 1.0. *JVT-T208.doc,* July 2006
- **G. SULLIVAN ; T. WIEGAND ; A. LUTHRA.** Draft of Version 4 of H.264/AVC (ITU-T Recommendation H.264 and ISO/IEC 14496-10 (MPEG-4 part 10) Advanced Video Coding). *Palma de Mallorca,* 18 October 2004